# EUROPÄISCHE PATENTSCHRIFT

(11) **EP 2 100 713 B1**
(45) Veröffentlichungstag und Bekanntmachung des Hinweises auf die Patenterteilung: **03.07.2019**
(21) Anmeldenummer: 09100121.4
(22) Anmeldetag: 18.02.2009
(51) Int. Cl.: B29C 44/58, B29C 33/00

(54) **WERKZEUG ZUR HERSTELLUNG VON KUNSTSTOFFEN**
TOOL FOR MANUFACTURING PLASTICS
OUTIL DE FABRICATION DE MATIÈRES PLASTIQUES

(30) Priorität: 12.03.2008 AT 3992008
(43) Veröffentlichungstag der Anmeldung: 16.09.2009
(73) Patentinhaber: Franz Stransky Gesellschaft m.b.H, 1150 Wien (AT)
(72) Erfinder: Jandl, Johann, 3011 Tullnerbach (AT); Haider, Christian, 8240 Friedberg (AT)
(74) Vertreter: Müllner, Martin

(56) Entgegenhaltungen:
- US-A- 3 384 335
- US-A- 3 778 496
- US-A- 5 283 026
- US-A1- 2005 146 068

## Beschreibung

### Technisches Gebiet

Die Erfindung betrifft eine Blockform zur Herstellung von gelochten Dämmplatten gemäß dem Oberbegriff des Anspruchs 1 oder 3.

### Stand der Technik

Dämmplatten, wie sie zur besseren Wärmedämmung von Gebäuden vorgesehen sind, werden aus Kostengründen meist aus geschlossenporigem Schaumstoff, wie z.B. expandiertem Polystyrol, hergestellt. Aus Kostengründen wird normalerweise ein ganzer Block aus dem Schaumstoff hergestellt, der danach in Platten der gewünschten Dicke zerschnitten wird. Dabei ergibt sich jedoch das Problem, dass solche Dämmplatten nicht dampfdurchlässig sind. Um dieses Problem zu lösen wurde bereits vorgeschlagen, solche Dämmplatten mit Löchern mit geringem Durchmesser zu versehen. Diese können einfach mittels Nadeln hergestellt werden, die durch die Platten (die zuvor durch Zerschneiden eines entsprechenden Blocks erzeugt wurden) gedrückt werden.

Dieses Verfahren ist allerdings relativ aufwändig. Der Block aus Schaumstoff muss zunächst geschnitten werden, dann muss jede Platte einzeln gelocht werden, und danach wird aus den gelochten Platten wieder ein Stapel gebildet, der dann verpackt und verschickt wird. Es ist nicht möglich, einen gesamten Stapel zu lochen, weil die dünnen Nadeln über die notwendige Länge nicht ausreichend stabil sind.

Es wurde daher in der US 2005146068 A, Absätze [0040] bis [0053], Fig. 7 und Fig. 4 eine Blockform vorgeschlagen, bei der in einer zwei Hälften aufweisenden Form in das Innere des Hohlraumes derselben Nadeln hineinragen, die in einer Hälfte gehalten sind und in Aufnahmebohrungen der zweiten Hälfte der Blockform eingreifen. Dadurch wird der Block bereits beim Expandieren des eingesetzten Materials mit den entsprechenden Bohrungen hergestellt. Dabei ergibt sich jedoch das Problem, dass die Nadeln eine sehr erhebliche Länge aufweisen müssen, um die Blöcke entsprechend rationell herstellen zu können, und dabei einen nur sehr geringen Durchmesser aufweisen dürfen, um entsprechend kleine Bohrungen herstellen zu können, die zwar die Dampfdurchlässigkeit gewährleisten, aber anderseits die Wärmedämmung nicht merkbar herabsetzen. Dadurch ergibt sich aber in der Praxis eine große Schwierigkeit, nämlich sicherzustellen, dass die Nadeln beim Schließen der Form in die Aufnahmebohrungen der zweiten Hälfte der Blockform treffen. Aus diesem Grund können bei einer solchen bekannten Form nur Nadeln mit entsprechend großem Durchmesser eingesetzt werden, um eine entsprechende Festigkeit der Nadeln zu gewährleisten, was jedoch zu einer erheblichen Verschlechterung der Wärmedämmung der hergestellten Dämmplatten führt, weil der in weiterer Folge aufgebrachte Verputz in die Löcher eindringen kann.

Aus der gattungsbildenden US 3384335 A (THEODOR SCHWARZ) 21.05.1968 und auch aus der US 5283026 A ist eine Blockform zur Herstellung von gelochten Dämmplatten bekannt, welche Blockform Wände, eine verschließbare, ein Ausbringen eines Blocks ermöglichende Öffnung sowie mehrere verschließbare Öffnungen, z.B. zur Zufuhr von expandierbarem Material, eines Expandiermittels, insbesondere Wasserdampf, und zum Anschließen einer Unterdruckquelle aufweist. Der Hohlraum ist im geschlossenen Zustand der Blockform von Nadeln durchsetzt, wobei eine außerhalb der Blockform verschiebbare Nadelhalteplatte vorgesehen ist. Die dieser Nadelhalteplatte benachbarte Wand der Blockform ist mit für je eine Nadel vorgesehenen Führungsbohrungen versehen. Gemäß der US 3384335 A ist diese Wand entfernbar, sodass dadurch die Öffnung zum Ausbringen des Blocks gebildet werden kann, gemäß der US 5283026 A ist die gegenüberliegende Wand entfernbar. Gemäß der US 3384335 A ist innerhalb der Blockform eine Nadelaufnahmeplatte vorgesehen, die mit Bohrungen zur Aufnahme der freien Enden der Nadeln versehen ist. Diese Nadelaufnahmeplatte ist fest an der Wand befestigt, die der Wand mit den Führungsbohrungen gegenüberliegt. Die Größe der Nadelaufnahmeplatte entspricht dem Querschnitt des Hohlraumes der Blockform quer zu den Nadeln, und die Bohrungen der Nadelaufnahmeplatte fluchten mit den Führungsbohrungen für die Nadeln in der Wand der Blockform, die mit den Bohrungen zur Aufnahme der freien Enden der Nadeln versehen ist. Die Ausführung gemäß US 5283026 A ist ähnlich, auch hier liegt während des Schäumens die Nadelaufnahmeplatte an der Wand gegenüber der Wand mit den Führungsbohrungen an, es sind aber sowohl die Nadelaufnahmeplatte als auch die Wand entfernbar, damit der geschäumte Block entnommen werden kann.

Auch hier ergibt sich in der Praxis die Schwierigkeit sicherzustellen, dass die Nadeln beim Schließen der Form bzw. bei deren Einschieben in die Form in die Bohrungen in der Nadelaufnahmeplatte treffen. Aus diesem Grund können auch bei dieser bekannten Form nur Nadeln mit entsprechend großem Durchmesser eingesetzt werden, um eine entsprechende Festigkeit der Nadeln zu gewährleisten, was jedoch zu der oben erwähnten erheblichen Verschlechterung der Wärmedämmung der hergestellten Dämmplatten führt.

### Darstellung der Erfindung

Ziel der Erfindung ist es, diese Nachteile zu vermeiden und eine Blockform der eingangs erwähnten Art vorzuschlagen, bei der dünne Nadeln eingesetzt werden können und gleichzeitig sichergestellt ist, dass diese beim Schließen der Form sicher in die entsprechenden Aufnahmebohrungen eingreifen.

Erfindungsgemäß wird dieses Ziel durch eine Blockform mit den Merkmalen des Anspruchs 1 bzw. des Anspruchs 3 erreicht.

Die beiden Ansprüche unterscheiden sich im Prinzip nur dadurch, dass im ersten Fall während der Herstellung eines Blocks die Nadelaufnahmeplatte bezüglich der Nadelhalteplatte in der entfernten Position ist, während sie im zweiten Fall der Nadelhalteplatte benachbart ist. Normalerweise ist die Nadelaufnahmeplatte über der Blockform angeordnet, sodass die Nadelhalteplatte im ersten Fall abgesenkt und im zweiten Fall angehoben ist. Im ersten Fall ist dann (zum Abschluss der Blockform) zwingend eine obere Wand notwendig, die zum Durchtritt der Nadeln Führungsbohrungen aufweisen muss. Im zweiten Fall ist (zum Abschluss der Blockform) zwingend eine untere Wand notwendig, die zur Fixierung der Nadeln Bohrungen, vorzugsweise Sackbohrungen, aufweist.

Durch die vorgeschlagenen Maßnahmen ist es im ersten Fall möglich, die Nadeln aus der Form auszufahren, sodass deren freie Enden innerhalb der Führungsbohrungen liegen, in diesem Zustand die Nadelaufnahmeplatte an die Innenseite der die Führungsbohrungen für die Nadeln aufweisenden Hälfte der Form anzulegen und die in den Führungsbohrungen geführten Nadeln durch entsprechendes Annähern der Nadelhalteplatte an die mit den Führungsbohrungen versehene Wand der Blockform in die Bohrungen der Nadelaufnahmeplatte einzuschieben.

Im zweiten Fall ist es ebenfalls möglich, die Nadeln aus der Form auszufahren, wobei deren freie Enden innerhalb der Durchgangsbohrungen der Nadelaufnahmeplatte liegen. Wenn die Nadelhalteplatte abgesenkt wird, sodass die Nadeln in die Blockform eingebracht werden, senkt man auch die Nadelaufnahmeplatte ab. Wenn die Nadeln in die Bohrungen der unteren Wand der Blockform eingebracht werden sollen, befindet sich die Nadelaufnahmeplatte unmittelbar über dieser unteren Wand. Daher sind die Nadeln sicher geführt und es besteht daher keine Gefahr, dass die Nadeln die Bohrungen der unteren Wand nicht treffen und zu Bruch gehen. Danach wird die Nadelhalteplatte nach oben bewegt, sodass ein Block hergestellt werden kann.

Zum Ausformen eines in der Form hergestellten Blockes wird zuerst die Nadelhalteplatte von der Blockform wegbewegt, wodurch die Nadeln aus den Bohrungen der Nadelaufnahmeplatte bzw. aus den Bohrungen der unteren Wand gleiten und aus dem hergestellten Block gezogen werden, bis sich deren freie Enden in den Führungsbohrungen der oberen Wand bzw. den Durchgangsbohrungen der Nadelaufnahmeplatte befinden. Anschließend kann die Blockform, die z.B. eine wegklappbare Wand aufweist, geöffnet und der mit den Bohrungen versehene Block ausgeschoben und weiter verarbeitet, z.B. zu Platten zerschnitten werden.

Aufgrund der exakten Führung der Nadeln können diese sehr dünn ausgeführt sein, sodass die mit einer erfindungsgemäßen Blockform hergestellten Dämmplatten kleine Durchbrüche mit glatten Wänden aufweisen, wodurch die gewünschte Dampfdurchlässigkeit bei praktisch unverminderten Wärmedämmeigenschaften erreicht wird. Es ist dabei gleichgültig, ob die Nadeln heiß oder kalt sind. Es ist auch die genaue Geometrie der Aufnahmebohrungen in der Nadelaufnahmeplatte (im ersten Fall) bzw. der Bohrungen in der unteren Wand (im zweiten Fall) gleichgültig, diese können im Durchmesser sehr klein oder groß sein, sie können tief oder seicht sein.

Durch die Merkmale des Anspruchs 2 ergibt sich der Vorteil, dass sich ein definierter (minimaler) Abstand zwischen der Nadelhalteplatte und der Nadelaufnahmeplatte ergibt, wenn diese Platten aufeinander zu bewegt werden. Damit wird das synchrone Verschieben der beiden Platten erleichtert. Außerdem kann in diesem Fall die Nadelaufnahmeplatte als untere Wand der Blockform verwendet werden. Auch im zweiten Fall kann gemäß Anspruch 4 die Nadelaufnahmeplatte als eine Wand der Blockform verwendet werden, in diesem Fall als obere Wand.

Durch die Merkmale des Anspruchs 1, dass der Bewegungsweg der Nadelhalteplatte (14) in einem Abstand von der Außenseite der mit Führungsbohrungen (6) für die Nadeln (13) versehenen Wand (5) der Blockform (1) endet, der kleiner als die freie Länge der aus der Nadelhalteplatte (14) ragenden Nadeln (13), aber größer als die freie Länge der Nadeln (13) vermindert um die Länge der Führungsbohrungen (6) bzw. der Dicke der Wand (5) ist, ist sichergestellt, dass während des Betriebs der Blockform die Nadeln stets in Eingriff mit den Führungsbohrungen der oberen Form bzw. den Durchgangsbohrungen der Nadelaufnahmeplatte gehalten sind. Das gleiche gilt für die Merkmale des Anspruchs 3, dass der Bewegungsweg der Nadelhalteplatte (14) in einem Abstand von der Außenseite der Nadelaufnahmeplatte (11') endet, der kleiner als die freie Länge der aus der Nadelhalteplatte (14) ragenden Nadeln (13), aber größer als die freie Länge der Nadeln (13) vermindert um die Länge der Durchgangsbohrungen (12') bzw. der Dicke der Nadelaufnahmeplatte (11') ist.

Durch die Merkmale des Anspruchs 5 ergibt sich der Vorteil, dass ein in der Form hergestellter Block nach dem Öffnen der Form leichter ausgeschoben werden kann.

In der Praxis müssen die Nadeln nur selten in die Führungsbohrungen der Wand der Blockform eingeschoben werden, nämlich bei der Herstellung und bei größeren Wartungsarbeiten. (Während des Betriebs sollten die Nadeln niemals aus den Führungsbohrungen heraus kommen.) Dennoch ist dies bei mehreren Tausend Nadeln ein nicht zu unterschätzender Aufwand. Es wäre daher günstig, die Führungsbohrungen entsprechend groß auszubilden, sodass die Nadeln die Führungsbohrungen zumindest zum überwiegenden Großteil automatisch treffen. Dies hätte zusätzlich den Vorteil, dass durch den Spalt zwischen den Nadeln und dem Rand der Führungsbohrungen Dampf in das Innere der Blockform eingeleitet werden könnte. In der Praxis hat sich aber gezeigt, dass sich dieser Spalt durch das expandierende Material sehr schnell verstopft, sodass dann keine zuverlässige Bedampfung mehr erfolgen kann.

Aus diesem Grund sind nach einer Ausgestaltung der Erfindung die Merkmale des Anspruchs 6 vorgesehen. Demnach sind die Nadeln in der Nadelhalteplatte in Hülsen gehalten. Diese Hülsen stehen aus der Nadelhalteplatte um mehr als die Dicke der mit den Führungsbohrungen versehenen Wand der Blockform vor. Wenn die Nadelhalteplatte ganz eingefahren wird, fahren die Hülsen durch die Führungsbohrungen hindurch und stoßen dadurch etwaiges expandiertes Material, das sich in den Führungsbohrungen abgesetzt hat, aus. (Mit den Nadelspitzen könnte dieser Effekt nicht erreicht werden, da die Nadeln aufgrund ihres geringen Durchmessers und ihrer großen Länge mechanisch nicht stabil genug wären.) Da die Führungsbohrungen einen Durchmesser aufweisen, der größer als der Durchmesser der Hülsen ist, kann durch den verbleibenden Spalt die Bedampfung erfolgen.

### Kurze Beschreibung der Abbildungen der Zeichnungen

Die Erfindung wird nun anhand der Zeichnung näher erläutert. Fig. 1a bis 1c zeigen schematisch einen Schnitt durch eine erfindungsgemäße Blockform zu verschiedenen Zeiten eines Arbeitszyklus; Fig. 2 zeigt die Befestigung der Nadeln in der Nadelhalteplatte; und Fig. 3a bis 3d zeigen eine zweite Ausführungsform einer erfindungsgemäßen Blockform zu verschiedenen Zeiten eines Arbeitszyklus.

### Weg(e) zur Ausführung der Erfindung

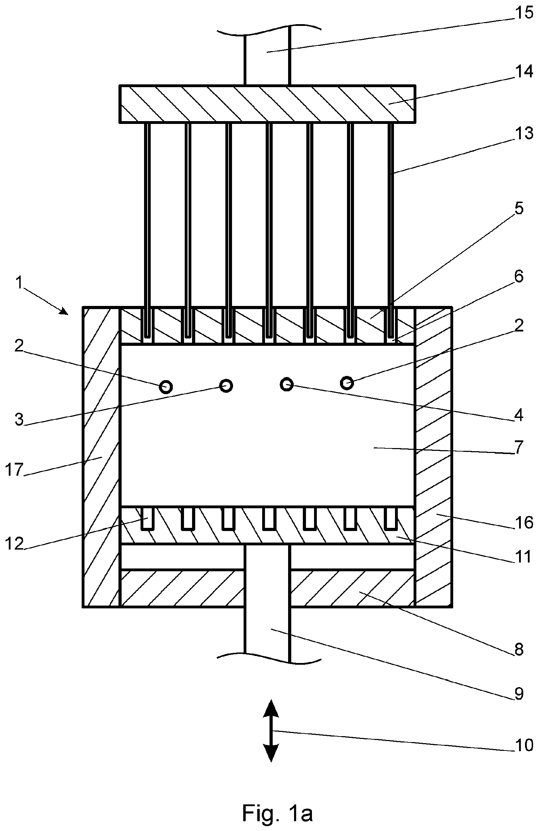

Die Blockform 1 (Fig. 1a) weist zwei parallel zueinander verlaufende Seitenwände 7 auf, wobei in mindestens einer von diesen verschließbare Öffnungen 2 zur Zufuhr von zu expandierendem Material, z.B. vorexpandiertem Polystyrol, sowie Öffnungen 3 zur Zufuhr von Expandiermittel, wie z.B. Wasserdampf, bzw. 4 zum Anlegen einer Unterdruckquelle angeordnet sind. Diese Seitenwände 7 sind über eine Wand 5 miteinander verbunden, die von Führungsbohrungen 6 durchsetzt ist, die sich senkrecht zur Ebene dieser Wand erstrecken. Weiters sind die Seitenwände 7 über eine Bodenplatte 8 miteinander verbunden. Diese ist von einem Stempel 9 durchsetzt, der eine Nadelaufnahmeplatte 11 trägt und in Richtung des Doppelpfeiles 10 verschiebbar ist. Die Nadelaufnahmeplatte 11 ist mit Sackbohrungen 12 versehen, die mit den Führungsbohrungen 6 der Wand 5 fluchten und zur Aufnahme von Nadeln 13 dienen, die in einer Nadelhalteplatte 14 gehalten sind und sich senkrecht zur Wand 5 erstrecken. Diese Nadelhalteplatte 14 ist von einem Stempel 15 getragen, der in seiner Längsrichtung verschiebbar ist.

Die Blockform 1 ist durch Stirnwände 16, 17 abschließbar, die wegklappbar oder in Richtung des Doppelpfeiles 10 verschiebbar sind und ein Ausschieben eines in der Blockform 1 hergestellten Blocks aus expandiertem Material ermöglichen. Im in Fig. 1a dargestellten Zustand der Blockform 1, in welchem die Stirnwände 16, 17 die Form dicht abschließen und die Nadelhalteplatte 14 angehoben ist, sodass sich die freien Enden der Nadeln 13 in den Führungsbohrungen 6 der Wand 5 befinden, und die Nadelaufnahmeplatte 11 in einem geringen Abstand von der Bodenplatte 8 gehalten ist, befindet sich die Blockform in einem Zustand, in dem ein hergestellter Block aus Schaumstoff ausgeschoben werden kann (wenn die Stirnwände 16, 17 weggeklappt werden). Danach wird ein neuer Arbeitszyklus gestartet.

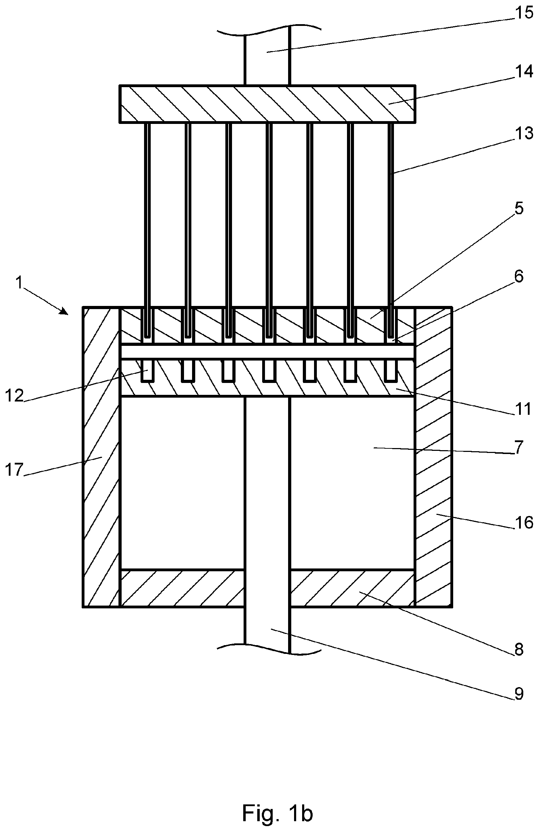

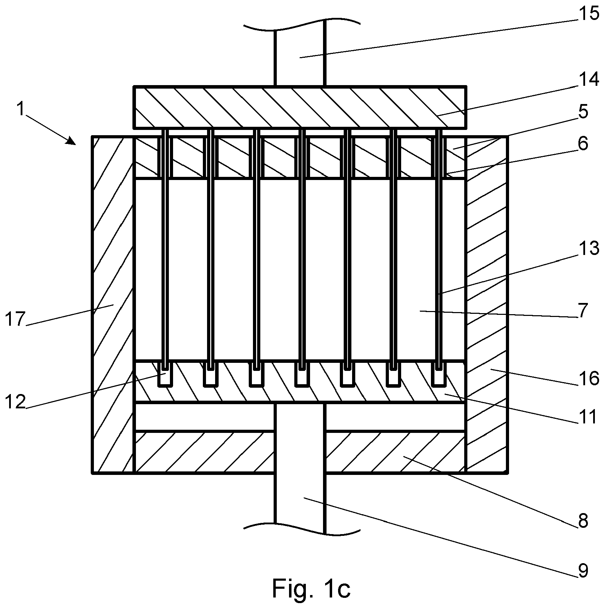

Dazu wird die Nadelaufnahmeplatte 11 gegen die mit den Führungsbohrungen 6 versehene Wand 5 bewegt (Fig. 1b) und an diese angelegt. (Ein geringer Abstand von einigen mm oder cm stört dabei nicht, weil die Nadeln über solch kurze Distanzen ausreichend steif sind.) Danach wird die Nadelhalteplatte 14 soweit gegen die Wand 5 der Blockform 1 bewegt, dass die Nadeln 13 in die Sackbohrungen 12 zur Aufnahme der Nadeln 13 eindringen. Anschließend werden die Nadelhalteplatte 14 und die Nadelaufnahmeplatte 11 gemeinsam gegen die Bodenplatte 8 bewegt (Fig. 1c), wobei diese Bewegung jedoch in der dargestellten Stellung (d.h. die Nadelaufnahmeplatte 11 hat einen geringen Abstand von der Bodenplatte 8) angehalten wird. Dadurch erstrecken sich die Nadeln 13, von denen nur einige dargestellt sind, durch den gesamten vom zu expandierenden Material erfüllbaren Hohlraum der Blockform 1.

Die Blockform 1 kann über die verschließbaren Öffnungen 2 mit vorexpandiertem Polystyrolgranulat beschickt werden, wonach die Form über die verschließbare Öffnung 3 mit Wasserdampf beaufschlagt wird. Anschließend wird das Innere der Form über die verschließbare Öffnung 4 mit einer Unterdruckquelle verbunden. Weiters kann ein weiterer Dampfstoß in das Innere der Form geleitet (und somit nachbedampft) werden, wonach wieder ein Unterdruck angelegt wird und nach dem Abbau des Unterdrucks mit dem Ausformen des so hergestellten Blocks begonnen werden kann.

Dazu wird die Nadelaufnahmeplatte 11 auf die Bodenplatte 8 abgesenkt, wodurch sich der hergestellte Block entspannen kann. Weiters werden die Stirnwände 16, 17 geöffnet. Anschließend wird die Nadelhalteplatte 14 von der die Führungsbohrungen 6 aufweisenden Wand 5 wegbewegt und so die Nadeln 13 in die Wand 5 zurückgezogen und der volle Querschnitt des Hohlraums der Blockform 1 freigegeben. Nun kann der hergestellte Block, der aufgrund der eingesetzten Nadeln 13 eine größere Zahl von Durchbrüchen mit kleinem Durchmesser und damit eine entsprechende Dampfdurchlässigkeit aufweist, aus der Form ausgeschoben werden.

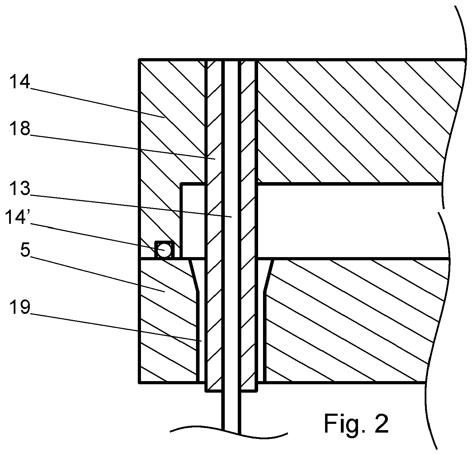

An Hand von Fig. 2 wird nun die Befestigung der Nadeln erläutert. Diese Fig. zeigt einen Ausschnitt aus der Nadelhalteplatte 14 und der Wand 5 der Blockform. In diesem Ausschnitt sind nur eine Nadel 13 und eine Führungsbohrung zu sehen. Die Nadel 13 ist in einer Hülse 18 gelagert, die (ebenso wie die Nadel 13) durch die Wand 5 hindurchgeht, aber (im Gegensatz zur Nadel 13) mit deren Unterseite etwa bündig abschließt. Dies ist die voll eingefahrene Position. Der Abstand zwischen der Nadelhalteplatte 14 und der Wand 5 bildet eine so genannte "Dampfkammer", die durch einen O-Ring 14' abgedichtet ist. Durch diese erfolgt die Bedampfung der Blockform durch die Führungsbohrungen der Wand 5 hindurch. Dies ist deshalb möglich, weil der Durchmesser der Führungsbohrungen größer ist als der Durchmesser der Hülsen 18, sodass ein Ringspalt 19 von z.B. 1 mm Dicke frei bleibt, auch wenn die Nadeln eingefahren sind.

In der Darstellung nach Fig. 2 befindet sich die Nadelhalteplatte 14 in der voll eingefahrenen Position. Dabei schließen die Hülsen 18 etwa bündig mit der Innenseite der Wand 5 ab. In der voll ausgefahrenen Position befinden sich die Spitzen der Nadeln auf einem ca. 3 mm höheren Niveau als das Niveau der Innenseite der Wand 5. Die Nadeln werden im Betrieb also nie aus der Wand 5 herausgezogen.

Der Bohrungsdurchmesser der Führungsbohrungen 6 muss deshalb größer sein als der Durchmesser der Nadeln 13, weil es sonst (bei der Herstellung oder nach größeren Wartungsarbeiten) unmöglich wäre, z.B. 5000 Nadeln gleichzeitig durch die engen Bohrungen durchzuführen. Die langen, dünnen Nadeln 13 benötigen eine sehr große Toleranz. Die relativ kurzen (und auch biegesteiferen) Hülsen 18 benötigen hingegen wesentlich weniger Toleranz, sodass es kein Problem ist, dass diese während des Betriebs zuverlässig in die Führungsbohrungen 6 hineingleiten. Die Absenkung der Nadelhalteplatte 14 erfolgt genau so weit, bis die Hülsen 18 bündig mit der Innenseite der Wand 5 abschließen.

Ohne diesen Abschluss durch die Hülsen 18 würden die Führungsbohrungen 6 während des Schäumvorganges stark verschmutzen und sich mit geschäumtem Material füllen.

Die zweite Funktion der Hülsen 18 besteht darin, dass - sollte der schmale Ringspalt 19, der für das Bedampfen vor gesehen ist, verschmutzen, z.B. durch Nachtreiben des Materials - diese Hülsen 18 beim jeweils nächsten Zyklus als Durchstoß-Werkzeug für die Führungsbohrungen dienen und diese Verunreinigungen ausstoßen.

Die durch die Nadeln 13 bedingten Durchbrüche weisen glatte Wände auf und neigen nicht zum Ausbrechen, wie dies bei durch Einstechen von Nadeln in volle Platten aus geschlossenporigem Schaumstoff der Fall sein kann.

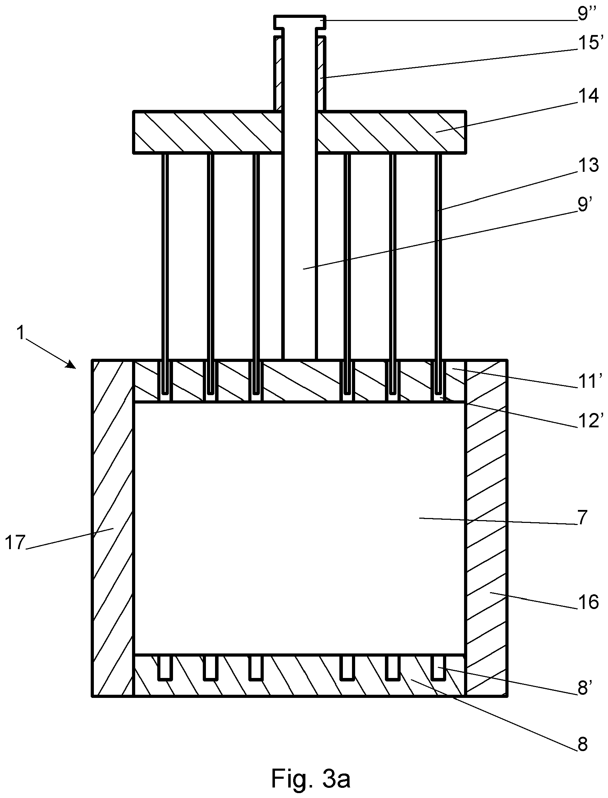

Die Ausführungsform gemäß den Fig. 3a bis 3d unterscheidet sich von der Ausführungsform gemäß den Fig. 1a bis 1c dadurch, dass die obere Wand 5 der Blockform 1 fehlt, dass die Bohrungen in der Nadelaufnahmeplatte 11' als Durchgangsbohrungen 12' ausgebildet sind und dass in der unteren Wand 8 Sackbohrungen 8' vorgesehen sind. Da während der Herstellung eines Blocks die Nadelaufnahmeplatte 11' in der angehobenen Stellung ist, muss der Stempel 9' nach oben aus der Blockform 1 herausgeführt sein. Zu diesem Zweck ist der Stempel 15' der Nadelhalteplatte 14 hohl ausgebildet und der Stempel 9' durch den hohlen Stempel 15' hindurchgeführt.

Um den maximalen Abstand zwischen der Nadelaufnahmeplatte 11' und der Nadelhalteplatte 14 zu begrenzen (und somit ein Herausgleiten der Nadeln 13 aus den Durchgangsbohrungen 12 zu verhindern) ist der Stempel 9' am oberen Ende 9" verbreitert; dies kann z.B. durch eine aufgeschraubte Mutter realisiert sein.

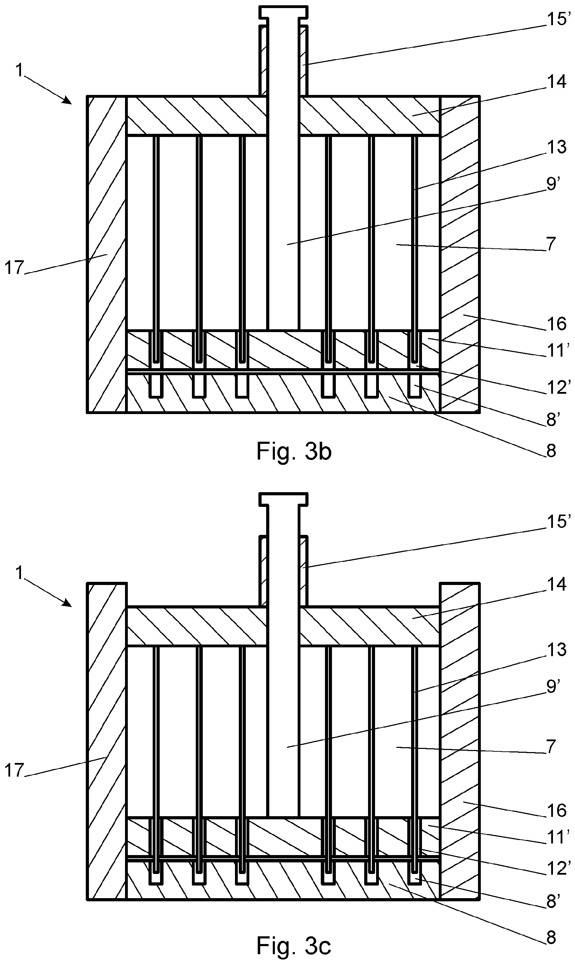

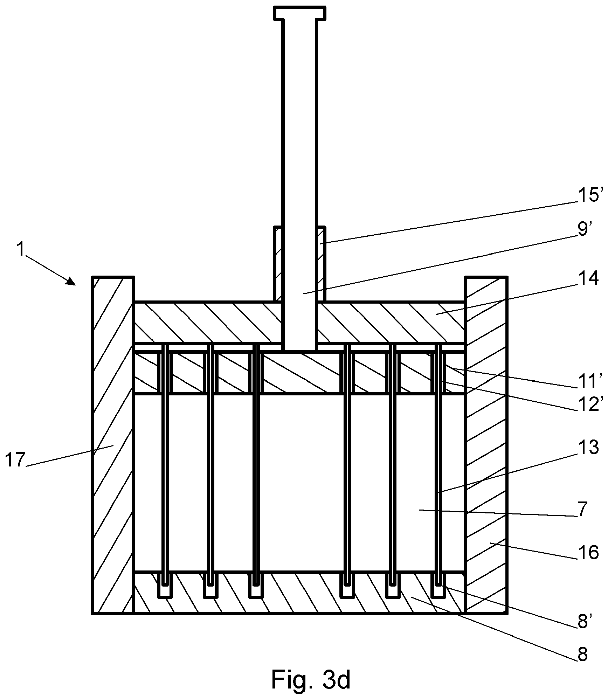

In der in Fig. 3a dargestellten Stellung befindet sich die Blockform 1 in der Stellung vor Beginn eines Zyklus, also nachdem der zuvor hergestellte Block ausgestoßen wurde und die Stirnwände 16, 17 geschlossen wurden. Um die Nadeln in das Innere der Blockform 1 zu bringen, werden die Nadelhalteplatte 14 und die Nadelaufnahmeplatte 11' gegen die mit den Sackbohrungen 8' versehene Wand 8 bewegt (Fig. 3b), bis die Nadelaufnahmeplatte 11' an dieser anliegt. (Ein geringer Abstand stört dabei nicht, weil die Nadeln auf kurzen Längen von einigen mm oder cm ausreichend steif sind.) Danach wird die Nadelhalteplatte 14 soweit gegen die Wand 8 der Blockform 1 bewegt, dass die Nadeln 13 in die Sackbohrungen 8' zur Aufnahme der Nadeln 13 eindringen (Fig. 3c). Anschließend wird die Nadelaufnahmeplatte 11' nach oben bewegt, etwa bis zur Nadelhalteplatte 14 (Fig. 3d). Dadurch erstrecken sich die Nadeln 13, von denen nur einige dargestellt sind, durch den gesamten vom zu expandierenden Material erfüllbaren Hohlraum der Blockform 1.

Die Herstellung des Blocks erfolgt nun analog dazu, wie dies an Hand der Fig. 1 beschrieben wurde. Nach der Herstellung des Blocks wird die Nadelaufnahmeplatte 11' geringfügig angehoben, damit der Block leichter ausgeschoben werden kann. Selbstverständlich kann auch bei dieser Ausführungsform eine feste obere Wand 5 vorgesehen sein (analog wie bei der Ausführungsform gemäß Fig. 1a bis 1c), ebenso wie bei der Ausführungsform gemäß den Fig. 1a bis 1c die untere Wand 8 weggelassen werden kann.

## Patentansprüche

1. Blockform zur Herstellung von gelochten Dämmplatten, welche Blockform (1) Wände (5, 8, 7, 16, 17), eine verschließbare, ein Ausbringen eines Blocks ermöglichende Öffnung sowie mehrere verschließbare Öffnungen (2, 3, 4), z.B. zur Zufuhr von expandierbarem Material, eines Expandiermittels, insbesondere Wasserdampf, und zum Anschließen einer Unterdruckquelle aufweist und deren Hohlraum im geschlossenen Zustand der Blockform von Nadeln (13) durchsetzt ist, wobei eine außerhalb der Blockform (1) verschiebbare Nadelhalteplatte (14) vorgesehen ist und die dieser Nadelhalteplatte (14) benachbarte Wand (5) der Blockform (1) mit für je eine Nadel (13) vorgesehenen Führungsbohrungen (6) versehen ist und innerhalb der Blockform (1) eine Nadelaufnahmeplatte (11) vorgesehen ist, die mit Bohrungen (12) zur Aufnahme der freien Enden der Nadeln (13) versehen ist, wobei die Größe der Nadelaufnahmeplatte (11) dem Querschnitt des Hohlraumes der Blockform (1) quer zu den Nadeln (13) entspricht und die Bohrungen (12) der Nadelaufnahmeplatte (11) mit den Führungsbohrungen (6) für die Nadeln (13) in der einen Wand (5) der Blockform (1) fluchten , **dadurch gekennzeichnet, dass** die Nadelaufnahmeplatte (11) innerhalb der Blockform (1) im Wesentlichen über die gesamte Erstreckung des Hohlraumes der Blockform (1) in Richtung der Nadeln (13) verschiebbar gehalten ist und **dass** der Bewegungsweg der Nadelhalteplatte (14) in einem Abstand von der Außenseite der mit Führungsbohrungen (6) für die Nadeln (13) versehenen Wand (5) der Blockform (1) endet, der kleiner als die freie Länge der aus der Nadelhalteplatte (14) ragenden Nadeln (13), aber größer als die freie Länge der Nadeln (13) vermindert um die Länge der Führungsbohrungen (6) bzw. der Dicke der Wand (5) ist.

2. Blockform nach Anspruch 1, **dadurch gekennzeichnet, dass** die Nadelaufnahmeplatte (11) mit Sackbohrungen (12) zur Aufnahme der Nadeln (13) versehen ist.

3. Blockform zur Herstellung von gelochten Dämmplatten, welche Blockform (1) Wände (5, 8, 7, 16, 17), eine verschließbare, ein Ausbringen eines Blocks ermöglichende Öffnung sowie mehrere verschließbare Öffnungen (2, 3, 4), z.B. zur Zufuhr von expandierbarem Material, eines Expandiermittels, insbesondere Wasserdampf, und zum Anschließen einer Unterdruckquelle aufweist und deren Hohlraum im geschlossenen Zustand der Blockform (1) von Nadeln (13) durchsetzt ist, wobei eine außerhalb der Blockform (1) verschiebbare Nadelhalteplatte (14) vorgesehen ist und wobei weiters innerhalb der Blockform (1) eine Nadelaufnahmeplatte (11') vorgesehen ist, die mit Durchgangsbohrungen (12') zur Aufnahme der Nadeln (13) versehen ist und deren Größe dem Querschnitt des Hohlraumes der Blockform (1) quer zu den Nadeln (13) entspricht, **dadurch gekennzeichnet, dass** die der Nadelhalteplatte (14) abgewandte Wand (8) der Blockform (1) mit für je eine Nadel (13) vorgesehenen Bohrungen (8'), vorzugsweise Sackbohrungen, versehen ist und die Durchgangsbohrungen (12') der Nadelaufnahmeplatte (11') mit den Bohrungen (8') in der einen Wand (8) der Blockform (1) fluchten, **dass** die Nadelaufnahmeplatte (11') innerhalb der Blockform (1) im Wesentlichen über die gesamte Erstreckung des Hohlraumes der Blockform (1) in Richtung der Nadeln (13) verschiebbar gehalten ist und **dass** der Bewegungsweg der Nadelhalteplatte (14) in einem Abstand von der Außenseite der Nadelaufnahmeplatte (11') endet, der kleiner als die freie Länge der aus der Nadelhalteplatte (14) ragenden Nadeln (13), aber größer als die freie Länge der Nadeln (13) vermindert um die Länge der Durchgangsbohrungen (12') bzw. der Dicke der Nadelaufnahmeplatte (11') ist.

4. Blockform nach Anspruch 3, **dadurch gekennzeichnet, dass** die Nadelaufnahmeplatte (11') in ihrer der einen Wand (8) abgekehrten Lage eine Wand der Blockform (1) bildet.

5. Blockform nach einem der Ansprüche 1 bis 4, **dadurch gekennzeichnet, dass** der Abstand der Nadelaufnahmeplatte (11 bzw. 11') von der gegenüberliegenden Innenseite der gegenüberliegenden Wand (5 bzw. 8) der Blockform (1) von einem der Arbeitsstellung während der Herstellung eines Blocks entsprechenden Abstand vergrößerbar ist.

6. Blockform nach einem der Ansprüche 1 bis 5, **dadurch gekennzeichnet, dass** die Nadeln (13) in der Nadelhalteplatte (14) in Hülsen (18) gehalten sind, die aus der Nadelhalteplatte (14) um mehr als die Dicke der mit den Führungsbohrungen (6) versehenen Wand (5) der Blockform (1) bzw. um mehr als die Dicke der Durchgangsbohrungen (12') der Nadelaufnahmeplatte (11') vorstehen, und dass die Führungsbohrungen (6) bzw. die Durchgangsbohrungen (12') einen Durchmesser aufweisen, der größer als der Durchmesser der Hülsen (18) ist.

## Claims

1. A block form for producing perforated insulating panels, which block form (1) includes walls (5, 8, 7, 16, 17), a closable opening that allows to discharge a block, as well as multiple closable openings (2, 3, 4), e.g. for supplying of expandable material, an expanding agent, in particular water vapour, and for connecting a vacuum source, and the cavity of which, in the closed state of the block form, is interspersed with needles (13), wherein a needle holding plate (14) displaceable outside of the block form (1) is provided and the wall (5) of the block form (1) adjacent to this needle holding plate (14) is provided with guide bores (6) each provided for one needle (13) and within the block form (1) a needle receiving plate (11) is provided which is provided with bores (12) for receiving the free ends of the needles (13), wherein the size of the needle receiving plate (11) corresponds to the cross-section of the cavity of the block form (1) transverse to the needles (13), and the bores (12) of the needle receiving plate (11) being aligned with the guide bores (6) for the needles (13) in the one wall (5) of the block form (1), **characterized in that** the needle receiving plate (11) is held displaceably within the block form (1) substantially accross the entire extent of the cavity of the block form (1) in the direction of the needles (13), and **in that** the movement path of the needle holding plate (14) ends at a distance from the outside of the wall (5) of the block form (1) provided with guide bores (6) for the needles (13), which is smaller than the free length of the needles (13) protruding from the needle holding plate (14), but larger than the free length of the needles (13) reduced by the length of the guide holes (6) or the thickness of the wall (5), respectively.

2. The block form according to claim 1, **characterized in that** the needle receiving plate (11) is provided with blind holes (12) for receiving the needles (13).

3. A block form for producing perforated insulating panels, which block form (1) includes walls (5, 8, 7, 16, 17), a closable opening that allows to discharge a block, as well as multiple closable openings (2, 3, 4), e.g. for supplying of expandable material, an expanding agent, in particular water vapour, and for connecting a vacuum source, and the cavity of which, in the closed state of the block form (1), is interspersed with needles (13), wherein a needle holding plate (14) displaceable outside of the block form (1) is provided and wherein further a needle receiving plate (11') is provided within the block form (1) which is provided with through bores (12') for receiving the needles (13), and the size of which corresponds to the cross-section of the cavity of the block form (1) transverse to the needles (13), **characterized in that** the wall (8) of the block form (1) facing away from the needle holding plate (14) has bores (8'), preferably blind bores each provided for one needle (13), and the through bores (12') of the needle receiving plate (11') are aligned with the bores (8') in the one wall (8) of the block form (1), **in that** the needle receiving plate (11') is held displaceably within the block form (1) substantially over the entire extent of the cavity of the block form (1) in the direction of the needles (13), and **in that** the movement path of the needle holding plate (14) ends at a distance from the outside of the needle receiving plate (11') that is smaller than the free length of the needles (13) protruding from the needle holding plate (14) but larger than the free length of the needles (13) reduced by the length of the through bores (12') or the thickness of the needle receiving plate (11'), respectively.

4. The block form according to claim 3, **characterized in that** the needle receiving plate (11') in its position facing away from the one wall (8) forms a wall of the block form (1).

5. The block form according to any of claims 1 to 4, **characterised in that** the distance of the needle receiving plate (11 or 11') from the opposite inner side of the opposite wall (5 or 8) of the block form (1) can be increased from a distance corresponding to the working position during the production of a block.

6. The block form according to any of claims 1 to 5, **characterized in that** the needles (13) in the needle holding plate (14) are held in sleeves (18) which protrude from the needle holding plate (14) by more than the thickness of the wall (5) of the block form (1) provided with the guide bores (6) or by more than the thickness of the through bores (12') of the needle receiving plate (11'), respectively, and **in that** the guide bores (6) and the through bores (12'), respectively, include a diameter larger than the diameter of the sleeves (18).

## Revendications

1. Moule pour blocs permettant de fabriquer des plaques d'isolation perforées, le moule pour blocs (1) comportant des parois (5, 8, 7, 16, 17), une ouverture pouvant être fermée et permettant l'extraction d'un bloc, ainsi que plusieurs ouvertures (2, 3, 4) pouvant être fermées et permettant, par exemple, l'introduction d'un matériau pouvant être expansé, d'un agent d'expansion, s'agissant notamment de vapeur d'eau, et le branchement d'une source de pression négative, la cavité du moule pour blocs étant en outre transpercée par des aiguilles (13) lorsque celui-ci est fermé, une plaque de support d'aiguilles (14) étant prévue de manière à pouvoir se déplacer à l'extérieur du moule pour blocs (1), et la paroi (5) du moule pour blocs (1) laquelle est adjacente à cette plaque de support d'aiguilles (14) étant pourvue de trous de guidage (6) prévus chacun pour une aiguille (13), et une plaque de réception d'aiguilles (11) laquelle est prévue au sein du moule pour blocs (1), étant pourvue de trous (12) destinés à recevoir les extrémités libres des aiguilles (13), la taille de la plaque de réception d'aiguilles (11) correspondant à la section transversale de la cavité du moule pour blocs (1) dans le sens transversal aux aiguilles (13), et les trous (12) de la plaque de réception d'aiguilles (11) étant alignés avec les trous de guidage (6) destinés aux aiguilles (13) dans l'une (5) des parois du moule pour blocs (1), **caractérisé en ce que** la plaque de réception d'aiguilles (11) est maintenue de manière à ce qu'elle puisse être déplacée au sein du moule pour blocs (1) sensiblement sur toute l'étendue du moule pour blocs (1) dans le sens des aiguilles (13) et **que** le point final de la course de la plaque de support d'aiguilles (14) est situé, par rapport à la face extérieure de la paroi (5) du moule pour blocs (1) laquelle est pourvue de trous de guidage (6) destinés aux aiguilles (13), à une distance qui est inférieure à la longueur libre des aiguilles (13) faisant saillie de la plaque de support d'aiguilles (14), mais supérieure à la longueur libre des aiguilles (13) après déduction de la longueur des trous de guidage (6) ou de l'épaisseur de la paroi (5).

2. Moule pour blocs selon la revendication 1, **caractérisé en ce que** la plaque de réception d'aiguilles (11) est pourvue de trous borgnes (12) destinés à recevoir les aiguilles (13) .

3. Moule pour blocs pour fabriquer des plaques d'isolation perforées, le moule pour blocs (1) comportant des parois (5, 8, 7, 16, 17), une ouverture pouvant être fermée et permettant l'extraction d'un bloc, ainsi que plusieurs ouvertures (2, 3, 4) pouvant être fermées et permettant, par exemple, l'introduction d'un matériau pouvant être expansé, d'un agent d'expansion, s'agissant notamment de vapeur d'eau, et le branchement d'une source de pression négative, la cavité du moule pour blocs (1) étant en outre transpercée par des aiguilles (13) lorsque celui-ci est fermé, une plaque de support d'aiguilles (14) étant prévue de manière à pouvoir se déplacer à l'extérieur du moule pour blocs (1), et une plaque de réception d'aiguilles (11'), prévue en outre à l'intérieur du moule pour blocs (1), étant pourvue de trous traversants (12') destinés à recevoir les aiguilles (13), et la taille de celle-ci correspondant à la section transversale de la cavité du moule pour blocs (1) dans le sens transversal aux aiguilles (13), **caractérisé en ce que** la paroi (8) du moule pour blocs (1), laquelle se trouve à l'opposé de la plaque de support d'aiguilles (14), est pourvue de trous (8'), s'agissant préférentiellement de trous borgnes, dont chacun est prévu pour une aiguille (13), et les trous traversants (12') de la plaque de réception d'aiguilles (11') étant alignés avec les trous (8') dans l'une (8) des parois du moule pour blocs (1), **que** la plaque de réception d'aiguilles (11') est maintenue de manière à ce qu'elle puisse être déplacée au sein du moule pour blocs (1) sensiblement sur toute l'étendue du moule pour blocs (1) dans le sens des aiguilles (13) et **que** le point final de la course de la plaque de support d'aiguilles (14) est situé, par rapport à la face extérieure de la plaque de réception d'aiguilles (11'), à une distance qui est inférieure à la longueur libre des aiguilles (13) faisant saillie de la plaque de support d'aiguilles (14), mais supérieure à la longueur libre des aiguilles (13) après déduction de la longueur des trous traversants (12') ou de l'épaisseur de la plaque de réception d'aiguilles (11').

4. Moule pour blocs selon la revendication 3, **caractérisé en ce que** la plaque de réception d'aiguilles (11') forme, lorsqu'elle est située à l'opposé l'une (8) des parois, une paroi du moule pour blocs (1).

5. Moule pour blocs selon l'une des revendications 1 à 4, **caractérisé en ce que** la distance de la plaque de réception d'aiguilles (11 ou 11') par rapport à la face intérieure opposée de la paroi opposée (5 ou 8) du moule pour blocs (1), peut être agrandie en partant d'une distance correspondant à la position de travail lors de la fabrication d'un bloc.

6. Moule pour blocs selon l'une des revendications 1 à 5, **caractérisé en ce que** les aiguilles (13) sont maintenues, au sein de la plaque de support d'aiguilles (14), dans des gaines (18) dont la saillie par rapport à la plaque de support d'aiguilles (14) est supérieure à l'épaisseur de la paroi (5) du moule pour blocs (1) pourvue de trous de guidage (6) ou supérieure à l'épaisseur des trous traversants (12') de la plaque de réception d'aiguilles (11'), et que les trous de guidage (6) ou les trous traversants (12') ont un diamètre qui est supérieur au diamètre des gaines (18).
